(19) Europäisches Patentamt
European Patent Office
Office européen des brevets

(11) **EP 4 390 203 A1**

(12) **EUROPEAN PATENT APPLICATION**
published in accordance with Art. 153(4) EPC

(43) Date of publication:
**26.06.2024 Bulletin 2024/26**

(21) Application number: **22858189.8**

(22) Date of filing: **04.07.2022**

(51) International Patent Classification (IPC):
***F16L 11/04*** (2006.01)     ***B32B 1/08*** (2006.01)
***B32B 27/34*** (2006.01)

(52) Cooperative Patent Classification (CPC):
**B32B 1/08; B32B 27/34; F16L 11/04**

(86) International application number:
**PCT/JP2022/026574**

(87) International publication number:
**WO 2023/021866 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.08.2021 JP 2021134309**

(71) Applicant: **Nitta Corporation
Osaka-shi, Osaka 556-0022 (JP)**

(72) Inventors:
• **TOMINAGA, Keita
Nabari-shi, Mie 518-0494 (JP)**
• **KOYAMA, Yoshihiro
Nabari-shi, Mie 518-0494 (JP)**
• **MANAI, Ryoji
Nabari-shi, Mie 518-0494 (JP)**

(74) Representative: **Strehl Schübel-Hopf & Partner
Maximilianstrasse 54
80538 München (DE)**

(54) **AIR BRAKE TUBE**

(57)     Provided is an air brake tube capable of achieving both pressure resistance in a high temperature environment and workability of routing in a vehicle. An air brake tube 10A has a multilayer structure, and has a hoop stress of more than 9.72 MPa in an environment of 125°C and a tensile modulus of less than 650 MPa in an environment of 23°C.

FIG. 1

**Description**

**TECHNICAL FIELD**

The present invention relates to an air brake tube.

**BACKGROUND ART**

In an air brake system used for a truck, a bus, or the like, a metal pipe or a polyamide-based resin tube is used. From the viewpoint of weight reduction and ease of a routing work, the use of the polyamide-based resin tube is increasing.
An air brake tube is used for flow of high-pressure air in a high temperature environment, and is thus required to have heat resistance and pressure resistance. As standards for the highest heat and pressure resistance requirements, DIN 74324, which is a German industry standard, defines a maximum operating temperature of 100°C and a maximum operating pressure of 1,250 kPa. In recent years, a temperature in the vicinity of the air brake tube has been increased, and as a standard for a higher temperature environment, ISO 7628, which is an international industrial standard, defines a maximum operating temperature of 125°C and a maximum operating pressure of 1,250 kPa.
In order to improve pressure resistance at the maximum operating temperature defined in ISO 7628, a multilayer tube including an innermost layer made of a polyamide-based resin, an outer layer made of a polyester-based elastomer, and an adhesive layer provided between the innermost layer and the outer layer has been proposed (Patent Literature 1). In Patent Literature 1, by using, for the outer layer, the polyester-based elastomer which has a melting point higher than that of a polyamide-based resin defined as a material for a tube in DIN 74324, the pressure resistance in a high temperature environment is improved.

**CITATION LIST**

**PATENT LITERATURE**

Patent Literature 1: JPH08-247344A

**SUMMARY OF INVENTION**

**TECHNICAL PROBLEM**

The polyester-based elastomer disclosed in Patent Literature 1 has rigidity higher than that of a polyamide-based resin generally used as an air brake tube. Therefore, as disclosed in Patent Literature 1, the multilayer tube including the layer made of the polyester-based elastomer has flexibility lower than that of a single-layer tube made of a polyamide-based resin. As a result, it is extremely difficult to perform a routing work in a vehicle such as a truck and a bus. In the related art, a single-layer tube made of a polyamide-based resin in accordance with DIN 74324, which is generally applied as the air brake tube, cannot satisfy pressure resistance strength in an environment of 125°C defined in category 3 in accordance with ISO 7628. On the other hand, by applying a polyamide-based resin having rigidity higher than that of the polyamide-based resin in accordance with DIN 74324, it is possible to satisfy the pressure resistance strength in an environment of 125°C defined in category 3 in accordance with ISO 7628, but in this case, since the polyamide-based resin having higher rigidity is used, it is extremely difficult to perform a routing work in the vehicle.
An object of the present invention is to provide an air brake tube capable of achieving both pressure resistance in a high temperature environment and workability of routing in a vehicle.

**SOLUTION TO PROBLEM**

An air brake tube according to the present invention has a multilayer structure, and has a hoop stress of more than 9.72 MPa in an environment of 125°C and a tensile modulus of less than 650 MPa in an environment of 23°C.

**ADVANTAGEOUS EFFECTS OF INVENTION**

According to the present invention, since the hoop stress in an environment of 125°C is more than 9.72 MPa, the air brake tube has pressure resistance in an environment of 125°C higher than pressure resistance in an environment of 125°C for a single-layer tube made of a polyamide-based resin in accordance with DIN 74324. Further, since the tensile modulus in an environment of 23°C is less than 650 MPa, the air brake tube has flexibility in an environment of 23°C higher than flexibility in an environment of 23°C for a single-layer tube made of a highly rigid polyamide-based resin that can satisfy the pressure resistance strength in an environment of 125°C defined in category 3 in accordance with ISO 7628. Therefore, it is possible to achieve both pressure resistance in a high temperature environment and workability of routing in a vehicle.

## BRIEF DESCRIPTION OF DRAWINGS

[FIG. 1] FIG. 1 is a cross-sectional view showing an air brake tube according to a first embodiment.
[FIG. 2] FIG. 2 is a cross-sectional view showing an air brake tube according to a second embodiment.

## DESCRIPTION OF EMBODIMENTS

Hereinafter, embodiments of the present invention will be described in detail with reference to the drawings. The embodiments to be described below are examples of the present invention, and the present invention is not limited thereto. In the following description relating to each embodiment, similar components will be denoted by the same reference numerals, and the description will be omitted as appropriate.

1. First Embodiment

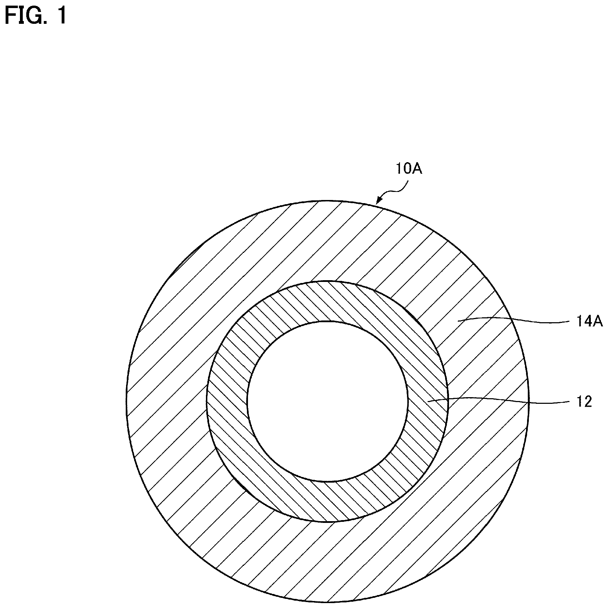

FIG. 1 shows a cross-sectional view of an air brake tube 10A according to a first embodiment. The air brake tube 10A has a multilayer structure. The multilayer structure includes a hollow inner layer 12 and an outer layer 14A provided on an outer side of the inner layer 12.

Materials of the inner layer 12 and the outer layer 14A are selected such that a hoop stress of the air brake tube 10A in an environment of 125°C is larger than 9.72 MPa and a tensile modulus of the air brake tube 10A in an environment of 23°C is less than 650 MPa.

Here, indexes of pressure resistance and flexibility are described in detail.

<Pressure Resistance>

The index of the pressure resistance is determined based on a burst pressure in accordance with ISO 7628 determined as a standard compatible with a higher temperature environment. In category 3 in accordance with ISO 7628, the burst pressure in an environment of 125°C defined as a maximum operating temperature is defined as 2.5 MPa. The burst pressure of 2.5 MPa is converted into the hoop stress using a hoop stress conversion equation defined in DIN 73378. The hoop stress obtained by conversion is the index of the pressure resistance.

In DIN 73378, the hoop stress conversion equation is defined as follows.

$$\sigma = p \cdot (d-s)/(2 \cdot s) \quad \text{(Equation 1)}$$

σ: hoop stress (MPa)
p: burst pressure (MPa)
d: tube outer diameter (mm)
s: tube wall thickness (mm)

In ISO 7628 and DIN 74324, the tube outer diameter, the tube wall thickness, and dimensional tolerances thereof are determined for each nominal tube diameter. When the hoop stress σ is determined using the hoop stress conversion equation in DIN 73378 based on the tube outer diameter and tube wall thickness, which are conditions that are most likely to cause burst within a dimensional tolerance, for a commonly used nominal tube diameter, the hoop stress corresponding to the burst pressure of 2.5 MPa is 9.72 MPa. That is, the hoop stress of 9.72 MPa is a reference value for determining whether the pressure resistance is satisfied.

<Flexibility>

The tensile modulus, which indicates difficulty of deformation, is used as the index of the flexibility. The lower the tensile modulus, the higher the flexibility. For the tensile modulus serving as a reference value for determining whether the flexibility is satisfied, a measurement result of the tensile modulus of a single-layer tube made of a polyamide 1010 (PA1010) resin that satisfies the pressure resistance defined as PHLY in DIN 74324 is used.

In measurement of the tensile modulus, a sample of the single-layer tube made of the polyamide 1010 resin that satisfies the pressure resistance defined as PHLY in DIN 74324 and cut into a length of 170 mm is left to stand in an environment of 23°C/50% RH for 24 hours or longer, and then set in a tensile testing device defined in Japan industrial standard JIS K7161-1 such that a distance between grips is 115 mm. A tensile test is started at a test speed of 1 mm/min in accordance with JIS K7161-1 in an environment of 23°C/50% RH, and a tensile load and an amount of increase in distance between grips are measured.

Based on the measured tensile load and an initial cross-sectional area of the tube sample, a tensile stress is determined using the following tensile stress calculation equation defined in JIS K7161-1.

$$\sigma = F/A \qquad (Equation\ 2)$$

$\sigma$: tensile stress (MPa)
F: tension load (N)
A: initial cross-sectional area ($mm^2$) of tube sample

Based on the measured amount of increase in distance between grips and an initial distance between grips, a nominal strain is determined using the following nominal strain calculation equation defined in JIS K7161-1.

$$\varepsilon t = Lt/L \qquad (Equation\ 3)$$

$\varepsilon t$: nominal strain (dimensionless)
L: initial distance between grips (mm)
Lt: amount of increase in distance between grips (mm)

Based on the obtained tensile stress and nominal strain, the tensile modulus is determined using the following tensile modulus calculation equation defined in JIS K7161-1.

$$Et = (\sigma2-\sigma1)/(\varepsilon2-\varepsilon1) \qquad (Equation\ 4)$$

Et: tensile modulus (MPa)
$\sigma1$: tensile stress (MPa) at nominal strain $\varepsilon1$ of 0.0005
$\sigma2$: tensile stress (MPa) at nominal strain $\varepsilon2$ of 0.0025

The single-layer tube made of the polyamide 1010 resin that satisfies the pressure resistance defined as PHLY in DIN 74324 has a tensile modulus of 650 MPa in an environment of 23°C/50% RH. That is, the tensile modulus of 650 MPa is a reference value for determining whether the flexibility is satisfied.

As described above, the reference value of the pressure resistance is the hoop stress of 9.72 MPa, and the reference value of the flexibility is the tensile modulus of 650 MPa. The materials of the inner layer 12 and the outer layer 14A of the air brake tube 10A are selected such that the hoop stress of the air brake tube 10A in an environment of 125°C is larger than 9.72 MPa and the tensile modulus of the air brake tube 10A in an environment of 23°C is less than 650 MPa.

In the present embodiment, the inner layer 12 is made of an unplasticized polyamide-based resin, and the outer layer 14A is made of a plasticized polyamide-based resin. With this structure, pressure resistance of the outer layer 14A made of the plasticized polyamide-based resin is supplemented by the unplasticized polyamide-based resin of the inner layer 12, and flexibility of the inner layer 12 made of the unplasticized polyamide-based resin is supplemented by the plasticized polyamide-based resin of the outer layer 14A.

When the inner layer 12 is made of the unplasticized polyamide-based resin, a wall thickness of the inner layer 12 is thinner and pressure resistance thereof is higher than those in the case in which the outer layer 14A is made of the unplasticized polyamide-based resin. Therefore, the wall thickness of the plasticized polyamide-based resin of the outer layer 14A can be increased, and a supplementary effect of the plasticized polyamide-based resin on flexibility can be enhanced.

When a proportion of the wall thickness of the inner layer 12 to a total wall thickness of the inner layer 12 and the outer layer 14A (hereinafter also simply referred to as "a proportion of the wall thickness of the inner layer 12") is too large, the flexibility of the unplasticized polyamide-based resin of the inner layer 12 is not supplemented by the plasticized polyamide-based resin of the outer layer 14A, and the flexibility cannot be satisfied. Therefore, the proportion of the wall thickness of the inner layer 12 is set such that the flexibility of the unplasticized polyamide-based resin of the inner layer 12 is supplemented by the plasticized polyamide-based resin of the outer layer 14A. When the proportion of the wall thickness of the inner layer 12 is less than 5%, it is difficult to stably mold the inner layer 12, and thus the proportion of the wall thickness of the inner layer 12 is preferably 5% or more.

In the case in which the unplasticized polyamide-based resin of the inner layer 12 has an excessively large hoop stress at 125°C when made into a single-layer tube, the plasticized polyamide-based resin of the outer layer 14A cannot fully supplement the flexibility of the unplasticized polyamide-based resin of the inner layer 12, and the flexibility cannot be satisfied. Similarly, in the case in which the plasticized polyamide-based resin of the outer layer 14A has an excessively large hoop stress at 125°C when made into a single-layer tube, the plasticized polyamide-based resin of the outer layer 14A cannot fully supplement the flexibility of the unplasticized polyamide-based resin of the inner layer 12, and the flexibility cannot be satisfied. Further, in the case in which the unplasticized polyamide-based resin of the inner layer 12 has an excessively small hoop stress at 125°C when made into a single-layer tube, the unplasticized polyamide-based resin of the inner layer 12 cannot supplement the pressure resistance of the plasticized polyamide-based resin of the outer layer 14A, and the pressure resistance cannot be satisfied. Therefore, the hoop stresses at 125°C when the resins are made into a single-layer tube are separately set such that the flexibility of the unplasticized polyamide-based resin of the inner layer 12 is supplemented by the plasticized polyamide-based resin of the outer layer 14A and the pressure resistance of the plasticized polyamide-based resin of the outer layer 14A is supplemented by the unplasticized polyamide-based resin of the inner layer 12.

In a polyamide-based resin, a decrease in stress from room temperature to a high temperature depends on a melting point or a deflection temperature under load. Specifically, the lower the melting point or the deflection temperature under load, the larger the decrease in stress from room temperature to a high temperature. Therefore, when the melting point or the deflection temperature under load of the polyamide-based resin used for each of the inner layer 12 and the outer layer 14A is too low, the pressure resistance under a high temperature environment cannot be satisfied due to a decrease in stress from 23°C to 125°C. Therefore, the melting point or the deflection temperature under load is set such that the decrease in stress of each of the inner layer 12 and the outer layer 14A from 23°C to 125°C is small.

A deflection temperature under load defined in ISO 75 can be used as the deflection temperature under load. ISO 75 is one of test methods for evaluating heat resistance of a synthetic resin. In ISO 75, the deflection temperature under load is defined as a temperature at which an increase in bending strain is 0.2% after a bending stress of 1.80 MPa is applied to a test piece and a temperature is raised at a rate of 120°C/hr.

In the air brake tube 10A, the proportion of the wall thickness of the inner layer 12 made of the unplasticized polyamide-based resin is 5% or more and 40% or less, the inner layer 12 is made of an unplasticized polyamide-based resin that has a hoop stress of more than 9.72 MPa and 25 MPa or less at 125°C when made into a single-layer tube, the outer layer 14A is made of a plasticized polyamide-based resin that has a hoop stress of 9.72 MPa or less at 125°C when made into a single-layer tube, and the unplasticized polyamide-based resin of the inner layer 12 and the plasticized polyamide-based resin of the outer layer 14A are made to have a melting point of 190°C or higher, or a deflection temperature under load when a bending stress of 1.80 MPa is applied in accordance with ISO 75 of 50°C or higher. Therefore, the hoop stress of the air brake tube 10A in an environment of 125°C is larger than 9.72 MPa, and the tensile modulus of the air brake tube 10A in an environment of 23°C is less than 650 MPa. Therefore, it is possible to achieve both pressure resistance in a high temperature environment and workability of routing in a vehicle.

2. Second Embodiment

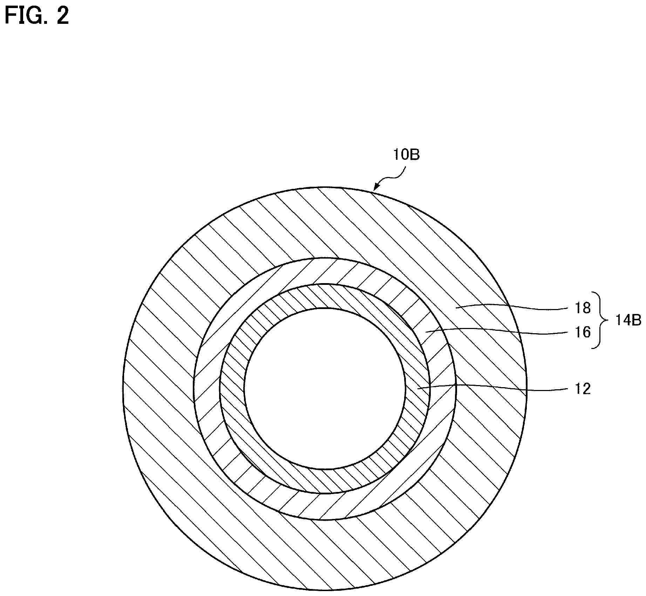

FIG. 2 shows a cross-sectional view of an air brake tube 10B according to a second embodiment. The air brake tube 10B is different from the air brake tube 10A (see FIG. 1) in that an outer layer 14B includes a first outer layer 16 provided on the outer side of the inner layer 12 and a second outer layer 18 provided on an outer side of the first outer layer 16. In other words, the air brake tube 10B has a three-layer structure including the inner layer 12, the first outer layer 16, and the second outer layer 18.

In the air brake tube 10B, materials of the inner layer 12, the first outer layer 16, and the second outer layer 18 are also selected such that a hoop stress of the air brake tube 10B in an environment of 125°C is larger than 9.72 MPa and a tensile modulus of the air brake tube 10B in an environment of 23°C is less than 650 MPa.

Similarly, in the air brake tube 10B, a proportion of a wall thickness of the inner layer 12 made of an unplasticized polyamide-based resin is 5% or more and 40% or less, the inner layer 12 is made of an unplasticized polyamide-based resin that has a hoop stress of more than 9.72 MPa and 25 MPa or less at 125°C when made into a single-layer tube, the outer layer 14B is made of a plasticized polyamide-based resin that has a hoop stress of 9.72 MPa or less at 125°C when made into a single-layer tube, and the unplasticized polyamide-based resin of the inner layer 12 and the plasticized polyamide-based resin of the outer layer 14B are made to have a melting point of 190°C or higher, or a deflection temperature under load when a bending stress of 1.80 MPa is applied in accordance with ISO 75 of 50°C or higher.

Therefore, the hoop stress of the air brake tube 10B in an environment of 125°C is larger than 9.72 MPa, and the tensile modulus of the air brake tube 10B in an environment of 23°C is less than 650 MPa. Therefore, it is possible to achieve both pressure resistance in a high temperature environment and workability of routing in a vehicle.

The first outer layer 16 can be made of, for example, an inexpensive plasticized polyamide-based resin that is inferior in chemical resistance, wear resistance, and the like, and the second outer layer 18 can be made of a plasticized polyamide-based resin that is superior in chemical resistance, wear resistance, and the like to the first outer layer 16. In this case, it is possible to improve chemical resistance, wear resistance, and the like while reducing a cost of the air brake tube 10B. In this way, in the air brake tube 10B, a degree of freedom of selection of the plasticized polyamide-based resin used for the outer layer 14B is increased, and thus a wide range of design is possible.

3. Examples

Hereinafter, the present invention will be described in detail based on Examples. Evaluation methods for pressure resistance and flexibility of air brake tubes obtained in the following Examples and Comparative Examples are as follows.

<Evaluation of Pressure Resistance>

A tube sample is left to stand in an environment of 23°C/50% RH for 1 hour or longer and is then placed in oil at 125°C for 10 minutes to start a burst test. In the burst test, the tube sample is broken in 30 seconds to 60 seconds, and a maximum burst pressure is measured. Based on the measured maximum burst pressure, the hoop stress under an environment of 125°C is obtained using the hoop stress conversion equation (see Equation 1) defined in DIN 73378.

The obtained hoop stress is the pressure resistance under an environment of 125°C. When the obtained hoop stress is more than 9.72 MPa, the obtained hoop stress is evaluated as "○", and when the obtained hoop stress is 9.72 MPa or less, the obtained hoop stress is evaluated as "x".

<Evaluation of Flexibility>

A tube sample cut into a length of 170 mm is left to stand for 24 hours or longer in an environment of 23°C/50% RH, and is then set in the tensile testing device defined in JIS K7161-1 such that the distance between grips is 115 mm. The tensile test is started at a test speed of 1 mm/min in accordance with JIS K7161-1 in an environment of 23°C/50% RH, and the tensile load and the amount of increase in distance between grips are measured.

Based on the measured tensile load and the initial cross-sectional area of the tube sample, the tensile stress is determined using the tensile stress calculation equation (see Equation 2) defined in JIS K7161-1. Further, based on the measured amount of increase in distance between grips and the initial distance between grips, a nominal strain is determined using the nominal strain calculation equation (see Equation 3) defined in JIS K7161-1. Based on the obtained tensile stress and nominal strain, the tensile modulus is determined using the tensile modulus calculation equation (see Equation 4) defined in JIS K7161-1.

The obtained tensile modulus is the flexibility in an environment of 23°C. When the obtained tensile modulus is less than 650 MPa, the obtained tensile modulus is evaluated as "○", and when the obtained tensile modulus is 650 MPa or more, the obtained tensile modulus is evaluated as "×".

<Examples I and Comparative Examples I>

In Examples I and Comparative Examples I, air brake tubes each having an outer diameter of 8 mm and a wall thickness of 1 mm were molded, and the pressure resistance in an environment of 125°C and the flexibility in an environment of 23°C were evaluated. In order to identify resin materials of the same polyamide type having different hoop stresses at 125°C, "-A", "-B", and "-C" were respectively added to ends of numbers of polyamide resins. The same applies to Examples II, Comparative Examples II, Examples III, Comparative Examples III, and Reference Examples to be described later.

Example I-1 is an air brake tube having a two-layer structure in which an inner layer is made of an unplasticized polyamide 612 resin, an outer layer is made of a plasticized polyamide 612-A resin, and the inner layer and the outer layer respectively have wall thicknesses of 0.25 mm and 0.75 mm (a proportion of the wall thickness of the inner layer is 250). Example I-2 is an air brake tube having a two-layer structure in which an inner layer is made of an unplasticized polyamide 6-A resin, an outer layer is made of a plasticized polyamide 612-A resin, and the inner layer and the outer layer respectively have wall thicknesses of 0.4 mm and 0.6 mm (a proportion of the wall thickness of the inner layer is 40%). Example I-3 is an air brake tube having a three-layer structure in which an inner layer is made of an unplasticized polyamide 612 resin, a first outer layer is made of a plasticized polyamide 612-B resin, a second outer layer is made of a plasticized polyamide 612-A resin, and the inner layer, the first outer layer, and the second outer layer respectively have wall thicknesses of 0.2 mm, 0.2 mm, and 0.6 mm (a proportion of the wall thickness of the inner layer is 20%). Example I-4 is an air brake tube having a two-layer structure in which an inner layer is made of an unplasticized polyamide 66-A resin, an outer layer is made of a plasticized polyamide 612-A resin, and the inner layer and the outer layer respectively have wall thicknesses of 0.1 mm and 0.9 mm (a proportion of the wall thickness of the inner layer is 10%).

Comparative Example I-1 is an air brake tube having a two-layer structure in which an inner layer is made of an unplasticized polyamide 612 resin, an outer layer is made of a plasticized polyamide 612-A resin, and the inner layer and the outer layer respectively have wall thicknesses of 0.5 mm and 0.5 mm (a proportion of the wall thickness of the inner layer is 50%). Comparative Example I-2 is an air brake tube having a two-layer structure in which an inner layer is made of an unplasticized polyamide 66-B resin, an outer layer is made of a plasticized polyamide 612-A resin, and the inner layer and the outer layer respectively have wall thicknesses of 0.1 mm and 0.9 mm (a proportion of the wall thickness of the inner layer is 10%). Comparative Example I-3 is an air brake tube having a two-layer structure in which an inner layer is made of an unplasticized polyamide 6-B resin, an outer layer is made of a plasticized polyamide 610-A resin, and the inner layer and the outer layer respectively have wall thicknesses of 0.4 mm and 0.6 mm (a proportion of the wall thickness of the inner layer is 40%). Comparative Example I-4 is a single-layer air brake tube made of a polyamide 1010 resin that satisfies the pressure resistance defined as PHLY in DIN 74324. Comparative Example I-5 is a single-layer air brake tube made of a plasticized polyamide 612-A resin. Comparative Example I-6 is an air brake tube having a two-layer structure in which an inner layer is made of an unplasticized polyamide 6-C resin, an outer layer is made of a plasticized polyamide 12 resin, and the inner layer and the outer layer respectively have wall thicknesses of 0.4 mm and 0.6 mm (a proportion of the wall thickness of the inner layer is 40%). Comparative Example I-7 is a single-layer air brake tube made of a plasticized polyamide 12 resin defined as PHLY in DIN 74324.

Table 1 shows evaluation results of the pressure resistance and the flexibility of each of the air brake tubes in Examples I and Comparative Examples I. In Table 1, hoop stresses shown in columns of the inner layer and the outer layer (the first outer layer and the second outer layer) are hoop stresses in an environment of 125°C when each material is made into a single-layer tube having an outer diameter of 8 mm and a wall thickness of 1 mm. Since the hoop stress is a characteristic that does not depend on a tube size and is determined only by the material, the same applies to Tables 2, 3, and 4, which will be described later. The deflection temperature under load is a deflection temperature under load when a bending stress of 1.80 MPa is applied in accordance with ISO 75. The same applies to Tables 2, 3, and 4, which will be described later.

[Table 1]

| | | Inner layer/single layer | | | | Outer layer | | | | | Proportion % of wall thickness of inner layer | Flexibility | Pressure re-sistance |
|---|---|---|---|---|---|---|---|---|---|---|---|---|---|
| | | Material | Wall thick-ness mm | Hoop stress MPa | Melting point/ deflection temperature under load °C | Outer lay-er type | Material | Wall thick-ness mm | Hoop stress MPa | Melting point/ deflecti on temperature under load °C | | | |
| Example I | 1 | Unplasticized PA612 | 0.25 | 16.20 | 190 or higher/ 50 or higher | - | Plasticized PA612-A | 0.75 | 7.40 | 190 or higher/ 50 or higher | 25 | ○ | ○ |
| | 2 | Unplasticized PA6-A | 0.4 | 12.80 | 190 or higher/ 50 or higher | - | Plasticized PA612-A | 0.6 | 7.40 | 190 or higher/ 50 or higher | 40 | ○ | ○ |
| | 3 | Unplasticized PA612 | 0.2 | 16.20 | 190 or higher/ 50 or higher | First | Plasticized PA612-B | 0.2 | 8.75 | 190 or higher/ 50 or higher | 20 | ○ | ○ |
| | | | | | | Second | Plasticized PA612-A | 0.6 | 7.40 | 190 or higher/ 50 or higher | | | |
| | 4 | Unplasticized PA66-A | 0.1 | 25.00 | 190 or higher/ 50 or higher | - | Plasticized PA612-A | 0.9 | 7.40 | 190 or higher/ 50 or higher | 10 | ○ | ○ |
| Comparati ve Example I | 1 | Unplasticized PA612 | 0.5 | 16.20 | 190 or higher/ 50 or higher | - | Plasticized PA612-A | 0.5 | 7.40 | 190 or higher/ 50 or higher | 50 | × | ○ |
| | 2 | Unplasticized PA66-B | 0.1 | 28.50 | 190 or higher/ 50 or higher | - | Plasticized PA612-A | 0.9 | 7.40 | 190 or higher/ 50 or higher | 10 | × | ○ |
| | 3 | Unplasticized PA6-B | 0.4 | 9.80 | 190 or higher/ 50 or higher | - | Plasticized PA610-A | 0.6 | 11.25 | 190 or higher/ 50 or higher | 40 | × | ○ |
| | 4 | PA1010 | 1 | 10.15 | 190 or higher/ 50 or higher | - | - | - | - | - | 100 | × | ○ |
| | 5 | Plasticized PA612-A | 1 | 7.40 | 190 or higher/ 50 or higher | - | - | - | - | - | 100 | ○ | × |
| | 6 | Unplasticized PA6-C | 0.4 | 9.75 | 190 or higher/ lower than 50 | - | Plasticized PA12 | 0.6 | 7.30 | Lower than 190/lower than 50 | 40 | ○ | × |
| | 7 | Plasticized PA12 | 1 | 7.30 | Lower than 190/lower than 50 | - | - | - | - | - | 100 | ○ | × |

<Examples II and Comparative Examples II>

In Examples II and Comparative Examples II, air brake tubes each having an outer diameter of 10 mm and a wall thickness of 1.25 mm were molded, and the pressure resistance under an environment of 125°C and the flexibility under an environment of 23°C were evaluated.

Example II-1 is an air brake tube having a two-layer structure in which an inner layer is made of an unplasticized polyamide 612 resin, an outer layer is made of a plasticized polyamide 612-A resin, and the inner layer and the outer layer respectively have wall thicknesses of 0.31 mm and 0.94 mm (a proportion of the wall thickness of the inner layer is 25%). Example II-2 is an air brake tube having a two-layer structure in which an inner layer is made of an unplasticized polyamide 6-A resin, an outer layer is made of a plasticized polyamide 612-A resin, and the inner layer and the outer layer respectively have wall thicknesses of 0.5 mm and 0.75 mm (a proportion of the wall thickness of the inner layer is 40%). Example II-3 is an air brake tube having a three-layer structure in which an inner layer is made of an unplasticized polyamide 612 resin, a first outer layer is made of a plasticized polyamide 612-B resin, a second outer layer is made of a plasticized polyamide 612-A resin, and the inner layer, the first outer layer, and the second outer layer respectively have wall thicknesses of 0.25 mm, 0.25 mm, and 0.75 mm (a proportion of the wall thickness of the inner layer is 20%). Example II-4 is an air brake tube having a two-layer structure in which an inner layer is made of an unplasticized polyamide 66-A resin, an outer layer is made of a plasticized polyamide 612-A resin, and the inner layer and the outer layer respectively have wall thicknesses of 0.12 mm and 1.13 mm (a proportion of the wall thickness of the inner layer is 10%).

Comparative Example II-1 is an air brake tube having a two-layer structure in which an inner layer is made of an unplasticized polyamide 612 resin, an outer layer is made of a plasticized polyamide 612-A resin, and the inner layer and the outer layer respectively have wall thicknesses of 0.62 mm and 0.63 mm (a proportion of the wall thickness of the inner layer is 50%). Comparative Example II-2 is an air brake tube having a two-layer structure in which an inner layer is made of an unplasticized polyamide 66-B resin, an outer layer is made of a plasticized polyamide 612-A resin, and the inner layer and the outer layer respectively have wall thicknesses of 0.12 mm and 1.13 mm (a proportion of the wall thickness of the inner layer is 10%). Comparative Example II-3 is an air brake tube having a two-layer structure in which an inner layer is made of an unplasticized polyamide 6-B resin, an outer layer is made of a plasticized polyamide 610-A resin, and the inner layer and the outer layer respectively have wall thicknesses of 0.5 mm and 0.75 mm (a proportion of the wall thickness of the inner layer is 40%). Comparative Example II-4 is a single-layer air brake tube made of a polyamide 1010 resin that satisfies the pressure resistance defined as PHLY in DIN 74324. Comparative Example II-5 is a single-layer air brake tube made of a plasticized polyamide 612-A resin. Comparative Example II-6 is an air brake tube having a two-layer structure in which an inner layer is made of an unplasticized polyamide 6-C resin, an outer layer is made of a plasticized polyamide 12 resin, and the inner layer and the outer layer respectively have wall thicknesses of 0.5 mm and 0.75 mm (a proportion of the wall thickness of the inner layer is 40%). Comparative Example II-7 is a single-layer air brake tube made of a plasticized polyamide 12 resin defined as PHLY in DIN 74324.

Table 2 shows evaluation results of the pressure resistance and the flexibility of each of the air brake tubes in Examples II and Comparative Examples II.

[Table 2]

| | | Inner layer/single layer | | | | Outer layer | | | | | Proportion % of wall thickness of inner layer | Flexibility | Pressure resistance |
|---|---|---|---|---|---|---|---|---|---|---|---|---|---|
| | | Material | Wall thickness mm | Hoop stress MPa | Melting point/deflection temperature under load °C | Outer layer type | Material | Wall thickness mm | Hoop stress MPa | Melting point/deflection temperature under load °C | | | |
| Example II | 1 | Unplasticized PA612 | 0.31 | 16.20 | 190 or higher/50 or higher | - | Plasticized PA612-A | 0.94 | 7.40 | 190 or higher/50 or higher | 25 | ○ | ○ |
| | 2 | Unplasticized PA6-A | 0.5 | 12.80 | 190 or higher/50 or higher | - | Plasticized PA612-A | 0.75 | 7.40 | 190 or higher/50 or higher | 40 | ○ | ○ |
| | 3 | Unplasticized PA612 | 0.25 | 16.20 | 190 or higher/50 or higher | First | Plasticized PA612-B | 0.25 | 8.75 | 190 or higher/50 or higher | 20 | ○ | ○ |
| | | | | | | Second | Plasticized PA612-A | 0.75 | 7.40 | 190 or higher/50 or higher | | | |
| | 4 | Unplasticized PA66-A | 0.12 | 25.00 | 190 or higher/50 or higher | - | Plasticized PA612-A | 1.13 | 7.40 | 190 or higher/50 or higher | 10 | ○ | ○ |
| Comparative Example II | 1 | Unplasticized PA612 | 0.62 | 16.20 | 190 or higher/50 or higher | - | Plasticized PA612-A | 0.63 | 7.40 | 190 or higher/50 or higher | 50 | × | ○ |
| | 2 | Unplasticized PA66-B | 0.12 | 28.50 | 190 or higher/50 or higher | - | Plasticized PA612-A | 1.13 | 7.40 | 190 or higher/50 or higher | 10 | × | ○ |
| | 3 | Unplasticized PA6-B | 0.5 | 9.80 | 190 or higher/50 or higher | - | Plasticized PA610-A | 0.75 | 11.25 | 190 or higher/50 or higher | 40 | × | ○ |
| | 4 | PA1010 | 1.25 | 10.15 | 190 or higher/50 or higher | - | - | - | - | - | 100 | × | ○ |
| | 5 | Plasticized PA612-A | 1.25 | 7.40 | 190 or higher/50 or higher | - | - | - | - | - | 100 | ○ | × |
| | 6 | Unplasticized PA6-C | 0.5 | 9.75 | 190 or higher/lower than 50 | - | Plasticized PA12 | 0.75 | 7.30 | Lower than 190/lower than 50 | 40 | ○ | × |
| | 7 | Plasticized PA12 | 1.25 | 7.30 | Lower than 190/lower than 50 | - | - | - | - | - | 100 | ○ | × |

EP 4 390 203 A1

<Examples III and Comparative Examples III>

In Examples III and Comparative Examples III, air brake tubes each having an outer diameter of 12 mm and a wall thickness of 1.5 mm were molded, and the pressure resistance under an environment of 125°C and the flexibility under an environment of 23°C were evaluated.

Example III-1 is an air brake tube having a two-layer structure in which an inner layer is made of an unplasticized polyamide 612 resin, an outer layer is made of a plasticized polyamide 612-A resin, and the inner layer and the outer layer respectively have wall thicknesses of 0.38 mm and 1.12 mm (a proportion of the wall thickness of the inner layer is 250). Example III-2 is an air brake tube having a two-layer structure in which an inner layer is made of an unplasticized polyamide 6-A resin, an outer layer is made of a plasticized polyamide 612-A resin, and the inner layer and the outer layer respectively have wall thicknesses of 0.6 mm and 0.9 mm (a proportion of the wall thickness of the inner layer is 40%). Example III-3 is an air brake tube having a three-layer structure in which an inner layer is made of an unplasticized polyamide 612 resin, a first outer layer is made of a plasticized polyamide 612-B resin, a second outer layer is made of a plasticized polyamide 612-A resin, and the inner layer, the first outer layer, and the second outer layer respectively have wall thicknesses of 0.3 mm, 0.3 mm, and 0.9 mm (a proportion of the wall thickness of the inner layer is 200). Example III-4 is an air brake tube having a two-layer structure in which an inner layer is made of an unplasticized polyamide 66-A resin, an outer layer is made of a plasticized polyamide 612-A resin, and the inner layer and the outer layer respectively have wall thicknesses of 0.15 mm and 1.35 mm (a proportion of the wall thickness of the inner layer is 10%).

Comparative Example III-1 is an air brake tube having a two-layer structure in which an inner layer is made of an unplasticized polyamide 612 resin, an outer layer is made of a plasticized polyamide 612-A resin, and the inner layer and the outer layer respectively have wall thicknesses of 0.75 mm and 0.75 mm (a proportion of the wall thickness of the inner layer is 50%). Comparative Example III-2 is an air brake tube having a two-layer structure in which an inner layer is made of an unplasticized polyamide 66-B resin, an outer layer is made of a plasticized polyamide 612-A resin, and the inner layer and the outer layer respectively have wall thicknesses of 0.15 mm and 1.35 mm (a proportion of the wall thickness of the inner layer is 10%). Comparative Example III-3 is an air brake tube having a two-layer structure in which an inner layer is made of an unplasticized polyamide 6-B resin, an outer layer is made of a plasticized polyamide 610-A resin, and the inner layer and the outer layer respectively have wall thicknesses of 0.6 mm and 0.9 mm (a proportion of the wall thickness of the inner layer is 40%). Comparative Example III-4 is a single-layer air brake tube made of a polyamide 1010 resin that satisfies the pressure resistance defined as PHLY in DIN 74324. Comparative Example III-5 is a single-layer air brake tube made of a plasticized polyamide 612-A resin. Comparative Example III-6 is an air brake tube having a two-layer structure in which an inner layer is made of an unplasticized polyamide 6-C resin, an outer layer is made of a plasticized polyamide 12 resin, and the inner layer and the outer layer respectively have wall thicknesses of 0.6 mm and 0.9 mm (a proportion of the wall thickness of the inner layer is 40%). Comparative Example III-7 is a single-layer air brake tube made of a plasticized polyamide 12 resin defined as PHLY in DIN 74324.

Table 3 shows evaluation results of the pressure resistance and the flexibility of each of the air brake tubes in Examples III and Comparative Examples III.

[Table 3]

| | | Inner layer/single layer | | | | Outer layer | | | | | Proportion % of wall thickness of inner layer | Flexibility | Pressure re-sistance |
|---|---|---|---|---|---|---|---|---|---|---|---|---|---|
| | | Material | Wall thick-ness mm | Hoop stress MPa | Melting point/ deflection temperature under load °C | Outer lay-er type | Material | Wall thick-ness mm | Hoop stress MPa | Melting point/ deflection temperature under load °C | | | |
| Example III | 1 | Unplasticized PA612 | 0.38 | 16.20 | 190 or higher/ 50 or higher | - | Plasticized PA612-A | 1.12 | 7.40 | 190 or higher/ 50 or higher | 25 | ○ | ○ |
| | 2 | Unplasticized PA6-A | 0.6 | 12.80 | 190 or higher/ 50 or higher | - | Plasticized PA612-A | 0.9 | 7.40 | 190 or higher/ 50 or higher | 40 | ○ | ○ |
| | 3 | Unplasticized PA612 | 0.3 | 16.20 | 190 or higher/ 50 or higher | First | Plasticized PA612-B | 0.3 | 8.75 | 190 or higher/ 50 or higher | 20 | ○ | ○ |
| | | | | | | Second | Plasticized PA612-A | 0.9 | 7.40 | 190 or higher/ 50 or higher | | | |
| | 4 | Unplasticized PA66-A | 0.15 | 25.00 | 190 or higher/ 50 or higher | - | Plasticized PA612-A | 1.35 | 7.40 | 190 or higher/ 50 or higher | 10 | ○ | ○ |
| Comparative Example III | 1 | Unplasticized PA612 | 0.75 | 16.20 | 190 or higher/ 50 or higher | - | Plasticized PA612-A | 0.75 | 7.40 | 190 or higher/ 50 or higher | 50 | × | ○ |
| | 2 | Unplasticized PA66-B | 0.15 | 28.50 | 190 or higher/ 50 or higher | - | Plasticized PA612-A | 1.35 | 7.40 | 190 or higher/ 50 or higher | 10 | × | ○ |
| | 3 | Unplasticized PA6-B | 0.6 | 9.80 | 190 or higher/ 50 or higher | - | Plasticized PA610-A | 0.9 | 11.25 | 190 or higher/ 50 or higher | 40 | × | ○ |
| | 4 | PA1010 | 1.5 | 10.15 | 190 or higher/ 50 or higher | - | - | - | - | - | 100 | × | ○ |
| | 5 | Plasticized PA612-A | 1.5 | 7.40 | 190 or higher/ 50 or higher | - | - | - | - | - | 100 | ○ | × |
| | 6 | Unplasticized PA6-C | 0.6 | 9.75 | 190 or higher/ lower than 50 | - | Plasticized PA12 | 0.9 | 7.30 | Lower than 190/lower than 50 | 40 | ○ | × |
| | 7 | Plasticized PA12 | 1.5 | 7.30 | Lower than 190/lower than 50 | - | - | - | - | - | 100 | ○ | × |

12

As is clear from Table 1, Table 2, and Table 3, Examples I, II, and III all satisfy the pressure resistance and the flexibility. On the other hand, Comparative Examples I, II, and III satisfy only one of the flexibility and the pressure resistance.

In Comparative Examples I-1, II-1, and III-1, the proportion of the wall thickness of the inner layer is 50%, which exceeds 40%. Therefore, the flexibility of the unplasticized polyamide-based resin of the inner layer is not supplemented by the plasticized polyamide-based resin of the outer layer, and the flexibility cannot be satisfied.

In Comparative Examples I-2, II-2, and III-2, the unplasticized polyamide 66-B resin of the inner layer has a hoop stress of 28.5 MPa at 125°C when made into a single-layer tube, which is more than 25 MPa. Therefore, the flexibility of the unplasticized polyamide-based resin of the inner layer cannot be fully supplemented by the plasticized polyamide-based resin of the outer layer, and the flexibility cannot be satisfied.

In Comparative Examples I-3, II-3, and III-3, the plasticized polyamide 610-A resin of the outer layer has a hoop stress of 11.25 MPa at 125°C when made into a single-layer tube, which is more than 9.72 MPa. Therefore, the plasticized polyamide-based resin of the outer layer cannot supplement the flexibility of the unplasticized polyamide-based resin of the inner layer, and the flexibility cannot be satisfied.

In Comparative Examples 1-4, II-4, and III-4, since there is no outer layer made of the plasticized polyamide-based resin, there is no supplement of the flexibility by the outer layer, and the flexibility cannot be satisfied.

In Comparative Examples 1-5, II-5, and III-5, since there is no inner layer made of the unplasticized polyamide-based resin, there is no supplement of the pressure resistance by the inner layer, and the pressure resistance cannot be satisfied.

In Comparative Examples I-6, II-6, and III-6, the unplasticized polyamide 6-C resin of the inner layer has a deflection temperature under load when a bending stress of 1.80 MPa is applied in accordance with ISO 75 of lower than 50°C, and the plasticized polyamide 12 resin of the outer layer has a melting point of lower than 190°C and a deflection temperature under load when a bending stress of 1.80 MPa is applied in accordance with ISO 75 of lower than 50°C. A resin having a low melting point or a low deflection temperature under load has a large decrease in stress from room temperature to a high temperature as compared with a resin having a high melting point or a high deflection temperature under load. Therefore, the pressure resistance cannot be satisfied.

In Comparative Examples I-7, II-7, and III-7, the air brake tube is a single layer. Further, the plasticized polyamide 12 resin defined as PHLY in DIN 74324 has a hoop stress of 9.72 MPa or less at 125°C when made into a single-layer tube, a melting point of lower than 190°C, and a deflection temperature under load when a bending stress of 1.80 MPa is applied in accordance with ISO 75 of lower than 50°C. Therefore, the pressure resistance cannot be satisfied.

In Examples I, II, and III, the inner layer is made of the unplasticized polyamide-based resin, the outer layer is made of the plasticized polyamide-based resin, the proportion of the wall thickness of the inner layer to a total wall thickness of the tube is 5% or more and 40% or less, the unplasticized polyamide-based resin has a hoop stress of more than 9.72 MPa and 25 MPa or less at 125°C when made into a single-layer tube, the plasticized polyamide-based resin has a hoop stress of 9.72 MPa or less at 125°C when made into a single-layer tube, and the unplasticized polyamide-based resin and the plasticized polyamide-based resin have a melting point of 190°C or higher or a deflection temperature under load when a bending stress of 1.80 MPa is applied in accordance with ISO 75 of 50°C or higher. Therefore, it is possible to satisfy both the pressure resistance and the flexibility, and it is possible to achieve both the pressure resistance in a high temperature environment and the workability of routing in a vehicle.

In Reference Examples 1 and 2 shown in Table 4, both the flexibility and the pressure resistance were satisfied. In Reference Example 1, an air brake tube having an outer diameter of 8 mm and a wall thickness of 1 mm is molded, and the pressure resistance in an environment of 125°C and the flexibility in an environment of 23°C are evaluated. In Reference Example 2, an air brake tube having an outer diameter of 12 mm and a wall thickness of 1.5 mm is molded, and the pressure resistance in an environment of 125°C and the flexibility in an environment of 23°C are evaluated.

[Table 4]

| | | Inner layer | | | | Outer layer | | | | Proportion % of wall thickness of inner layer | Flexibility | Pressure resistance |
|---|---|---|---|---|---|---|---|---|---|---|---|---|
| | | Material | Wall thickness mm | Hoop stress MPa | Melting point/ deflection temperature under load °C | Material | Wall thickness mm | Hoop stress MPa | Melting point/ deflection temperature under load °C | | | |
| Reference Example | 1 | Unplasticized PA6-B | 0.4 | 9.80 | 190 or higher/ 50 or higher | Plasticized PA610-B | 0.6 | 9.72 | 190 or higher/ 50 or higher | 40 | ○ | ○ |
| | 2 | Unplasticized PA6-B | 0.6 | 9.80 | 190 or higher/ 50 or higher | Plasticized PA610-B | 0.9 | 9.72 | 190 or higher/ 50 or higher | 40 | ○ | ○ |

Although the embodiments and Examples of the present invention have been described above, the present invention is not limited to the above-described embodiments and Examples, and can be appropriately modified within the scope of the gist of the present invention.

REFERENCE SIGNS LIST

10A, 10B air brake tube
12 inner layer
14A, 14B outer layer

**Claims**

1.  An air brake tube comprising:

    a multilayer structure, wherein
    a hoop stress at 125°C is more than 9.72 MPa and a tensile modulus at 23°C is less than 650 MPa.

2.  The air brake tube according to claim 1, wherein

    the multilayer structure includes an inner layer made of an unplasticized polyamide-based resin and an outer layer made of a plasticized polyamide-based resin provided on an outer side of the inner layer,
    a proportion of a wall thickness of the inner layer to a total wall thickness of the inner layer and the outer layer is 5% or more and 40% or less,
    the unplasticized polyamide-based resin has a hoop stress at 125°C of more than 9.72 MPa and 25 MPa or less when made into a single-layer tube,
    the plasticized polyamide-based resin has a hoop stress at 125°C of 9.72 MPa or less when made into a single-layer tube, and
    the unplasticized polyamide-based resin and the plasticized polyamide-based resin have a melting point of 190°C or higher or a deflection temperature under load when a bending stress of 1.80 MPa is applied in accordance with ISO 75 of 50°C or higher.

FIG. 1

FIG. 2

## INTERNATIONAL SEARCH REPORT

International application No.

**PCT/JP2022/026574**

**A. CLASSIFICATION OF SUBJECT MATTER**

***F16L 11/04***(2006.01)i; ***B32B 1/08***(2006.01)i; ***B32B 27/34***(2006.01)i
FI: F16L11/04; B32B1/08 B; B32B27/34

According to International Patent Classification (IPC) or to both national classification and IPC

**B. FIELDS SEARCHED**

Minimum documentation searched (classification system followed by classification symbols)

F16L11/04; B32B1/08; B32B27/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-530242 A (E. I. DU PONT DE NEMOURS AND COMPANY) 12 October 2017 (2017-10-12) paragraphs [0012]-[0132] | 1 |
| A | | 2 |
| Y | JP 2010-520827 A (DSM IP ASSETS B.V.) 17 June 2010 (2010-06-17) claims, paragraphs [0001]-[0045] | 1 |
| A | | 2 |
| Y | JP 2014-224607 A (EVONIK INDUSTRIES AG) 04 December 2014 (2014-12-04) claims, paragraphs [0008]-[0041] | 1 |
| A | | 2 |
| Y | WO 2020/225176 A1 (BASF SE) 12 November 2020 (2020-11-12) claims, p. 2, line 28 to p. 24, line 6 | 1 |
| A | | 2 |
| A | JP 2003-253113 A (UBE IND LTD) 10 September 2003 (2003-09-10) entire text, all drawings | 1-2 |

☑ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/026574**

**C.    DOCUMENTS CONSIDERED TO BE RELEVANT**

| Category* | Citation of document, with indication, where appropriate, of the relevant passages | Relevant to claim No. |
|---|---|---|
| A | JP 2005-325803 A (NITTA MOORE CO LTD) 24 November 2005 (2005-11-24)<br>entire text, all drawings | 1-2 |

Form PCT/ISA/210 (second sheet) (January 2015)

INTERNATIONAL SEARCH REPORT
Information on patent family members

International application No.

**PCT/JP2022/026574**

| Patent document cited in search report | | | Publication date (day/month/year) | Patent family member(s) | | | Publication date (day/month/year) |
|---|---|---|---|---|---|---|---|
| JP | 2017-530242 | A | 12 October 2017 | US 2016/0264777 A1 paragraphs [0030]-[0169]<br>WO 2016/053965 A1<br>EP 3201274 A1<br>CN 106795371 A | | | |
| JP | 2010-520827 | A | 17 June 2010 | US 2010/0104790 A1 claims, paragraphs [0001]-[0051]<br>WO 2008/110326 A1<br>EP 2121310 A1<br>CN 101636266 A<br>KR 10-2009-0119769 A | | | |
| JP | 2014-224607 | A | 04 December 2014 | US 2014/0338780 A1 claims, paragraphs [0014]-[0054]<br>EP 2842736 A1<br>CN 104165251 A<br>KR 10-2014-0135643 A | | | |
| WO | 2020/225176 | A1 | 12 November 2020 | EP 3966285 A1 claims, p. 2, line 28 to p. 24, line 6<br>CN 113795551 A | | | |
| JP | 2003-253113 | A | 10 September 2003 | (Family: none) | | | |
| JP | 2005-325803 | A | 24 November 2005 | (Family: none) | | | |

Form PCT/ISA/210 (patent family annex) (January 2015)

## REFERENCES CITED IN THE DESCRIPTION

**Patent documents cited in the description**

- JP H08247344 A